# EUROPEAN PATENT APPLICATION

(11) **EP 2 736 280 A1**
(43) Date of publication of application: **28.05.2014**
(21) Application number: 12382462.5
(22) Date of filing: 26.11.2012
(51) Int. Cl.: H04W 4/08, H04L 29/08

(54) **Method and system for managing members of a group in a telecommunication service**

(71) Applicant: Telefonica S.A., 28013 Madrid (ES)
(72) Inventor: Neystadt, John (Eugene), 28013 Madrid (ES); Drori, Yossi, 28013 Madrid (ES)
(74) Representative: Gonzalez-Alberto Rodriguez, Natalia

(57) **Abstract**

The method comprises updating a list of contacts stored in a database of a group management system of a telecommunication service, the method receiving said update from an external source; and selecting by a user at least one group and retrieving from said group management system the contact data of said group members to establish a new telecommunication interaction. An analyzer further retrieving a list of CDRs from a database server, a list of current groups and a list of past and new subscribers of said telecommunication service and processing them by means of a detection algorithm to generate one or more suggested lists of contacts or groups; sending to said group management system said generated lists of contacts or groups; and selecting by said user which group will be used to update said group management system database. The system of the invention is adapted to implement the method of the invention.

## Description

### Field of the art

The present invention generally relates to telecommunication services and more particularly to a method and system for managing members of a group in a telecommunication service.

### Prior State of the Art

Group communication refers to communication between three or more individuals. Small group communication includes numbers from three to about twenty people, and large group communication includes numbers larger than that (i.e., a lecture hall of 300 students or a theatrical production with an audience of 3,000).

The most common example of group communication in the Internet is an electronic mailing list. An electronic mailing list or email list is a special usage of email that allows for widespread distribution of information to many Internet users. It is similar to a traditional mailing list - a list of names and addresses - as might be kept by an organization for sending publications to its members or customers, but typically refers to four things - a list of email addresses, the people ("subscribers") receiving mail at those addresses, the publications (email messages) sent to those addresses, and a reflector, which is a single email address that, when designated as the recipient of a message, will send a copy of that message to all of the subscribers.

Electronic mailing lists are usually fully or partially automated through the use of special mailing list software and a reflector address that are set up on a server capable of receiving email. Many electronic mailing list servers have a special email address in which subscribers (or those that want to be subscribers) can send commands to the server to perform such tasks as subscribing and unsubscribing, temporarily halting the sending of messages to them, or changing available preferences. Some list servers also allow people to subscribe, unsubscribe, change preferences, etc. via a website.

Yahoo! Groups is one of the world's largest collections of online discussion boards. The term Groups refers to Internet communication which is a hybrid between an electronic mailing list and a threaded Internet forum, in other words, Group messages can be read and posted by e-mail or on the Group's webpage like a web forum. Groups can be created with public or member-only access. Some Groups are simply announcement bulletin boards, to which only the Group moderators can post, while others are discussion forums.

A group receives a web address and an email address when it is created and can be listed in one of the Yahoo! Groups directory categories if desired. Groups listed in the Yahoo! Groups directory can also be found via a Yahoo! Groups search.

New members can join groups directly, or may be invited by a moderator to join. Some groups have restricted memberships, which allow group managers to accept or reject new members. Some groups are closed and allow only members who have been directly invited by a group manager to join the group.

Mobile phone users struggle to manually manage their contact list of people they communicate with and keeping them up-to date. Creating groups of contacts for family, work, and other criteria is an effort and keeping them up to date with changes is preventing efficient communications.

Some prior art describe methods for managing electronic mailing lists, as for instance the patent EP 1493090 *Hierarchical org-chart based email mailing list maintenance* which describes a method of email messaging using mailing lists comprising the steps of: receiving information relating to an organizational hierarchy; extracting from the received information at least identifiers of members of the organizational hierarchy, information relating to positions of the members in the organizational hierarchy, and information relating to email addresses of the members; and generating a plurality of mailing lists based on the extracted information.

Such functionality is available for a while in social networks, such as Facebook®, which offers to add a "friend" based on relationships with mutual friends; however this is not available for traditional 1:1 telecommunication services, such as mobile messaging, and phone or video calls.

A call detail record (CDR) is a file containing information about recent system usage such as the identities of sources (points of origin), the identities of destinations (endpoints), the duration of each call, the amount billed for each call, the total usage time in the billing period, the total free time remaining in the billing period, and the running total charged during the billing period. In a traditional telecommunications system, a CDR contains information about all the calls passing through the telephone exchange. The CDRs are generated by Automatic Message Accounting (AMA) and processed by the operations support system (OSS).

The object of the present invention is to provide a method to automatically managing members of a group or contact list in a telecommunication service.

### Summary of the Invention

In accordance with this invention, the previous objective is obtained, in a first aspect, by providing in a first aspect a method for updating a list of contacts stored in a database of a group management system of a telecommunication service comprising, receiving the update list of contacts from an external source and selecting by a user of said telecommunication service at least one group regarding said list of contacts and retrieving from the group management system the contact data of the group members to establish a new telecommunication interaction.

On contrary to the known proposals, the method of the first aspect comprises performing the following steps:
a) retrieving by an analyzer a list of CDRs from a database server, a list of current groups defined in the system and a list of past and new subscribers of the telecommunication service and processing them by means of a detection algorithm to generate one or more lists of contacts or groups, said CDRs being produced by a communication system (D) selected among a telephony, instant messaging, social network communications or email from a telecommunication interaction between users;
b) sending to said group management system the generated one or more suggested lists of contacts or groups; and
c) selecting by said user which group will be used to update the database of the group management system,
wherein said user has access to said group management system by means of a telecommunications device.

According to one embodiment the generated lists of contacts or groups are shared by two or more users who are members of the group. The list of contacts or groups are shared only upon approval of said at least another contact member of the group.

According to another embodiment, the detection algorithm operates detecting repeated frequent communications between user telecommunications devices and forms a cluster of users that exchange communications between them over a period of time taking into account:
- frequent telecommunications interactions inside candidate groups;
- telecommunication links allowed between members of a group; and
- members in common in the contact list of the telecommunication devices.

According to another embodiment, the detection algorithm operates detecting a cluster of users located within the same distance and/or at the same time interval during said telecommunication interaction. Even, the detection algorithm can further operate detecting a cluster of users performing said telecommunication interaction during a preconfigured event, for instance in Christmas evening or any other culture specific day.

In yet another embodiment, preferably only the user having the best detected score of the repeated communications will be included in said one or more suggested lists of contacts or groups. That is, for instance, only the user with the biggest number of communications between the group members will be included. This best user can then be named as the group creator, or leader, thus letting the user selecting the group to have more information about the group in order to update the database of the group management system.

A second aspect of the present invention relates to a system for managing members of a group or contact list in a telecommunication service, comprising:
- a group management system (H) of a telecommunication service containing a database to store a list of contacts;
- means for updating said list of contacts from an external source; and
- means for allowing a user (A) of said telecommunication service to select at least one group regarding said list of contacts and to retrieve from said group management system (H) the contact data of said group members to establish a new telecommunication interaction,

On contrary to the known proposals, the system of the second aspect comprises an analyzer (E) adapted to retrieve a list of call detail records (CDRs) from a database server (C), a list of current groups defined in the system (7) and a list of past and new subscribers of the telecommunication service (6) and to process them by means of a detection algorithm to generate one or more suggested lists of contacts or groups, said CDRs being produced by a communication system (D) selected among a telephony, instant messaging, social network communications or email from a telecommunication interaction between users (A); wherein said user (A) has access to said group management system (H) by means of a telecommunications device.

The system of the second aspect of the present invention is adapted to implement the method of the first aspect of the invention.

### Brief Description of the Drawings

The previous and other advantages and features will be more fully understood from the following detailed description of embodiments, with reference to the attached, which must be considered in an illustrative and non-limiting manner, in which:
Figure 1 is an illustration of the overall system used for the method of the present invention in order to manage groups in a contact list.
Figure 2 is a diagram for the group detection algorithm used by the method of the present invention.

### Detailed Description of Several Embodiments

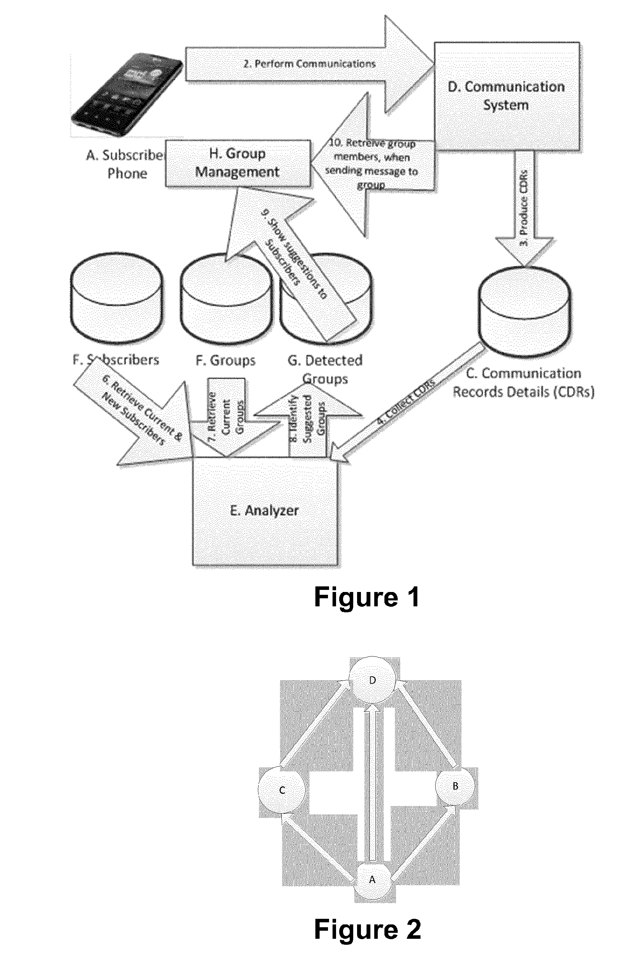

Figure 1 show the overall system used in the present invention. The basis of the invention is a communications system (D), such as telephony, email, social network communications, instant messaging, etc. Such system, maintains a list of subscribers (F), and produces communication records details - CDRs (C).

A group analyzer (E) works in two modes - full and incremental. In full mode it needs to identify list of groups for the first time, while in incremental, it processes the changes in newly joined subscribers, and changes in communication patterns, to identify new groups and changes of memberships in existing groups.

The Analyzer (E) collects a list of subscribers from subscribers database (6), a list of current groups (F) from system or personal contact list (F), and extracts CDRs (4) from CDR database (C), each of which include source, destination, time and optionally a location of each communication event. Location events alternatively may be stored in a separate database, and need to be first extracted and correlated with CDR database.

The Analyzer (E), further looks according to one of the algorithms and detects a new group or a new potential candidate for an existing group, then it stores (8) them in the detected groups database.

The group management (H) system interacts with a subscriber. Two variants of interaction are possible:
1. Create & modifying personal groups - In this case, a subscriber maintains his own group. The Group Management detects and offers to create a new group or add newly detected members to an existing group.
2. Global groups - In this case, groups are shared among multiple subscribers. The Group Management detects new groups, or new subscribers of existing groups, and adds or invites subscribers to join them automatically. Other group members can see names of people detected as candidates for the groups, but until they accept, they should not see full contact details such as phone number or email, to protect the privacy of the members.

Figure 2 shows a communication graph for the group detection algorithms.

All detection algorithms produce a number of candidate groups. Each candidate detection group has a likeness score, although only top N detections with highest scores are outputted. All algorithms treat the communications as a graph, where each subscriber is a node, and communication between subscribers is a link between two nodes.

The different detection algorithms are:
1. Repeated frequent communications within same group of people.
   Detect a cluster of people that exchange communications between them over a period of time. The main factors that influence the score are:
   - Communication frequency inside candidate groups.
   - How many links are in the candidate group (e.g. not every person may communicate with all the people of the forming the group)
   - Are people in the candidate group, also have other candidate group members in their contact list.
2. Same-location, same time interval, recurring time pattern.
   Detect a cluster of people, that are located within same distance (if location is available, or according to the location of communications they perform with other people), at same repeating time interval (time of day or week) in a recurring pattern. The factors that influence the score are:
   - Closeness of the distance during the time window
   - Number of repeated instances
   - Are people in the candidate group, also have other candidate group members in their contact list. 3. Communications during event or recurring time.
      Same as 2, but during a list of preconfigured events (such as Christmas evening, or other culture specific holiday).

According to the above, the invention is able to find the main subscriber for the detected group. For instance, whenever the system is detecting a potential group it also seeks for the most active subscriber in the group, the one with the biggest number of communications between the group members for instance. The system can then offer the new detected group for this main subscriber to be the creator, instead of sending it to all. On another hand, in an existing group, this information can be used to also tell how is the 'leader' of a group based on the history of the subscriber's communication before the group was created.

The foregoing describes embodiments of the present invention and modifications, obvious to those skilled in the art can be made thereto, without departing from the scope of the present invention.

## Claims

1. A method for managing members of a group or contact list in a telecommunication service, comprising updating a list of contacts stored in a database of a group management system of a telecommunication service, the method comprising receiving said update list of contacts from an external source; and selecting, a user of said telecommunication service, at least one group regarding said list of contacts and retrieving from said group management system the contact data of said group members to establish a new telecommunication interaction, **characterized in that** the method comprises performing the following steps:
a) retrieving by an analyzer a list of call detail records (CDRs) from a database server, a list of current groups defined in the system and a list of past and new subscribers of said telecommunication service and processing them by means of a detection algorithm to generate one or more suggested lists of contacts or groups, said CDRs being produced by a communication system (D) selected among a telephony, instant messaging, social network communications or email from a telecommunication interaction between users;
b) sending to said group management system said generated one or more suggested lists of contacts or groups; and
c) selecting by said user which group will be used to update the database of said group management system,
wherein said user has access to said group management system by means of a telecommunications device.

2. A method according to claim 1, **characterized in that** said generated one or more suggested lists of contacts or groups are shared by two or more users who are members of the group.

3. A method according to claim 2, comprising only performing said sharing upon approval of said at least another user telecommunication device member of the group.

4. A method according to claim 1, **characterized in that** said detection algorithm operates detecting repeated frequent communications between user telecommunications devices and forms a cluster of users that exchange communications between them over a period of time taking into account:
- frequent telecommunications interactions inside candidate groups;
- telecommunication links allowed between members of a group; and
- members in common in the contact list of the telecommunication devices.

5. A method according to claim 1, **characterized in that** said detection algorithm operates detecting a cluster of users located within the same distance and/or at the same time interval during said telecommunication interaction.

6. A method according to claim 4, **characterized in that** said detection algorithm further operates detecting a cluster of users when performing said telecommunication interaction during a preconfigured event.

7. A method according to claim 4 or 5, **characterized in that** it comprises including in said one or more suggested lists of contacts or groups the user having the best detected score of said repeated communications.

8. A method according to claim 7, **characterized in that** it comprises including said user having the best detected score as a creator of said one or more suggested lists of contacts or groups.

9. A system for managing members of a group or contact list in a telecommunication service, comprising:
- a group management system (H) of a telecommunication service containing a database to store a list of contacts;
- means for updating said list of contacts from an external source; and
- means for allowing a user (A) of said telecommunication service to select at least one group regarding said list of contacts and to retrieve from said group management system (H) the contact data of said group members to establish a new telecommunication interaction,
**characterized in that** it further comprises:
- an analyzer (E) adapted to retrieve a list of call detail records (CDRs) from a database server (C), a list of current groups defined in the system (7) and a list of past and new subscribers of said telecommunication service (6) and to process them by means of a detection algorithm to generate one or more suggested lists of contacts or groups, said CDRs being produced by a communication system (D) selected among a telephony, instant messaging, social network communications or email from a telecommunication interaction between users (A);
wherein said user (A) has access to said group management system (H) by means of a telecommunications device.

10. A system according to claim 9, **characterized in that** is adapted to implement the method of claims 1 to 8.
